# EUROPEAN PATENT SPECIFICATION

(11) **EP 3 237 653 B1**
(45) Date of publication and mention of the grant of the patent: **14.11.2018**
(21) Application number: 15841100.9
(22) Date of filing: 18.12.2015
(51) Int. Cl.: C25B 1/08, C25B 9/20, F02B 43/10, F02M 25/12

(54) **ELECTROLYSIS PRODUCT GAS GENERATOR, SYSTEM AND METHOD FOR GENERATING A PRODUCT GAS**
ELEKTROLYSEPRODUKTGASGENERATOR, SYSTEM UND VERFAHREN ZUR ERZEUGUNG EINES PRODUKTGASES
GÉNÉRATEUR DE GAZ PRODUIT D'ÉLECTROLYSE, SYSTÈME ET PROCÉDÉ DE GÉNÉRATION DE GAZ PRODUIT

(30) Priority: 22.12.2014 NL 2014033
(43) Date of publication of application: 01.11.2017
(73) Proprietor: Exintec Beheer B.V., 8081 AC Elburg (NL)
(72) Inventor: VAN DONGEN, Ron, 49847 WIELEN (DE); VAN DONGEN, Peter, 8081 AC Elburg (NL)
(74) Representative: EP&C
(86) International application number: PCT/NL2015/050886
(87) International publication number: WO 2016/105188

(56) References cited:
- EP-A1- 0 188 320
- DE-A1-102009 050 872
- US-A- 4 339 324
- US-A1- 2004 040 838
- US-A1- 2011 089 029

## Description

The present invention relates to an electrolysis product gas generator for producing a product gas containing hydrogen gas and oxygen gas on the basis of electrolysis of an aqueous electrolyte, e.g. said product gas to be supplied to a hydrocarbon fuel combusting device, e.g. an internal combustion engine, e.g. a diesel engine, e.g. for propulsion of an inland waterway cargo vessel. The invention further relates to a system and method for generating a product gas, a hydrocarbon fuel combustion system and an (inland waterway) cargo ship comprising such an electrolysis product gas generator.

Hydrocarbon fuel enhancement is a known process of using a mixture of hydrogen, oxygen and conventional hydrocarbon fuel in an internal combustion engine, to improve fuel economy, power output, or both, and/or to reduce atmospheric pollutants, e.g. but not necessarily NOₓ and CO emissions. The combination of gas comprising hydrogen gas and oxygen is referred to as 'product gas'. Product gas acts as a catalyst in hydrocarbon combustion processes. Commonly known methods for fuel enhancement include injecting hydrogen and oxygen produced through electrolysis via a special gas injector mounted to the air inlet/ intake manifold of a hydrocarbon fuel combustion device.

An electrolysis product gas generator allows retrofitting of existing hydrocarbon fuel combusting devices, e.g. an internal combustion engine, e.g. a diesel engine, resulting in improved performance, and/or reduced emissions of the existing hydrocarbon fuel combusting devices. Accordingly, the provision of an electrolysis product gas generator, to a hydrocarbon fuel combustion system with a hydrocarbon fuel combustion device, wherein product gas is supplied to the hydrocarbon fuel combustion device, may be a cost effective alternative to replacing the entire hydrocarbon fuel combustion device by an improved hydrocarbon fuel combustion device. For example, the replacement of diesel engines used for propulsion of an inland waterway cargo vessel is difficult and expensive, while retrofitting them with an electrolysis product gas generator can improve its performance, and/or reduce emissions significantly. DE102009050872 relates to a device for reducing fuel consumption in a combustion engine through the supply of oxyhydrogen (HHO)-gas, converted by an electrolyser.

Electrolysis of water is the decomposition of water (H₂O) into oxygen (O₂) and hydrogen gas (H₂) due to an electric current being passed through the water. When an electrical source is connected to two electrode plates (typically made from some inert metal such as stainless steel, titanium, platinum or indium) which are placed in the water, hydrogen gas will appear at the cathode (the negatively charged electrode, where electrons enter the water, and oxygen will appear at the anode (the positively charged electrode). The gas comprising hydrogen gas and oxygen is herein referred to as 'product gas'.

Electrolytic cells for generating hydrogen gas from water are known in the prior art, e.g. from US2011/0089029, US4,339,324 and US2004/0040838. From EP0188320 an electrolytic cell of improved design is known whereby sea water is electrolyzed to form an aqueous hypochlorite solution.
Such electrolysis product gas generators are commonly known and commercially available. The aim of the present invention is to provide an improved electrolysis product gas generator.

This aim is achieved according to a first aspect of the invention with an improved design of the electrolysis product gas generator according to claim 1, in which:
said product gas generator comprising a tank having an electrolyte inlet and a product gas exhaust, and a power supply, wherein a row of multiple cell stacks is provided in said tank, each cell stack being composed of vertically arranged plate members, including in succession:
   - an isolator/ conductor plate member;
   - a first reactor plate member;
   - a spacer plate member;
   - a second reactor plate member;
wherein the isolator/conductor plate member has an isolator plate with a window or edge notch in which a conductive patch is arranged at a location so as to be in contact with the adjacent metal reactor plate of the cell stack and with the adjacent metal reactor plate of an adjacent cell stack,
wherein the first and second reactor plate members each have an isolating frame surrounding a window and a metal reactor plate arranged in said window,
wherein the spacer plate member has an isolating frame defining a pocket in said spacer plate member,
wherein the pocket is filled with aqueous electrolyte so that the electrolyte is in contact with the adjacent first and second metal reactor plates of the cell stack, the pocket being in communication with the electrolyte inlet of the tank,
wherein each plate member has a top edge and a bottom edge,
wherein each spacer plate member further comprises a bottom edge electrolyte channel extending along said bottom edge and distinct from said pocket, said bottom edge electrolyte channel being in communication with the electrolyte inlet of the tank,
wherein the first reactor plate member has a cut-out or edge notch in a lower region of the isolating frame thereof embodied to define a electrolyte inlet flue interconnecting the bottom edge electrolyte channel and the pocket in the adjacent spacer plate member,
wherein the isolator plate member has in a lower corner region thereof a cut-out or edge notch remote from the window or edge notch in which a conductive patch is arranged, and wherein the first and second reactor plate members of the same cell stack also each have in the lower region thereof a cut-out or edge notch in the isolating frame thereof, which cut-outs or edge notches in the lower region are all aligned with one another and are in communication with the bottom edge electrolyte channel to form an electrolyte duct to said electrolyte inlet of said tank.

This aim is furthermore achieved according to a second aspect of the invention with an improved design of the electrolysis product gas generator according to claim 2, in which:
said product gas generator comprising a tank having an electrolyte inlet and a product gas exhaust, and a power supply, wherein a row of multiple cell stacks is provided in said tank, each cell stack being composed of vertically arranged plate members, including in succession:
   - an isolator/ conductor plate member;
   - a first reactor plate member;
   - a spacer plate member;
   - a second reactor plate member;
wherein the isolator/conductor plate member has an isolator plate with a window or edge notch in which a conductive patch is arranged at a location so as to be in contact with the adjacent first reactor plate member of the cell stack and with the adjacent second reactor plate member of an adjacent cell stack,
wherein the first and second reactor plate members each have an isolating frame surrounding a window and a metal reactor plate arranged in said window,
wherein the spacer plate member has an isolating frame defining a pocket in said spacer plate member,
   wherein the pocket is filled with aqueous electrolyte so that the electrolyte is in contact with the adjacent first and second metal reactor plates of the cell stack, the pocket being in communication with the electrolyte inlet of the tank,
wherein each plate member has a top edge and a bottom edge,
wherein the spacer plate member has a top edge product gas channel extending along the top edge thereof and distinct from said pocket, the top edge product gas channel being in communication with the product gas exhaust of the tank,
wherein the first reactor plate member has a cut-out or edge notch in an upper region of the isolating frame thereof embodied to define a product gas exit flue interconnecting the pocket in the adjacent spacer plate member and the top edge product gas channel thereof,
wherein the isolator plate member has in an upper region thereof a cut-out or edge notch remote from the window or edge notch in which a conductive patch is arranged, and wherein the first and second reactor plate members of the same cell stack also each have in the upper region thereof a cut-out or edge notch in the isolating frame, which cut-outs or edge notches in the upper region are all aligned with one another and are in communication with the top edge product gas channel to form a product gas discharge,
wherein - when an electric source is connected to the power supply of said product gas generator, so that electric current fluxes between the metal reactor plates in the windows of the first and second reactor plate members through the electrolyte in the pocket - said electrolyte decomposes and resulting product gas exits said pocket of the cell stack via said product gas exit flue, said top edge product gas channel and said product gas discharge to said product gas exhaust of the tank.

Both aspects can be provided separately or in combination in a product gas generator.

In a cell stack according to the invention the following functional elements can be identified:
- an isolator/ conductor plate member having an isolator plate
- a conductive patch
- a first and second reactor plate member, each having an isolating frame surrounding a window and a metal (stainless steel) reactor plate arranged in said window,
- a spacer plate member having an isolating frame defining a pocket
- a bottom edge electrolyte channel and/or top edge product gas channel
- an electrolyte inlet flue interconnecting the bottom edge electrolyte channel and a pocket and/ or a product gas exit flue interconnecting a pocket and the top edge product gas channel.

It is well conceivable that multiple functional elements are produced as a single construction part. E.g. the first and second reactor plate members and the conductive patch can be produced in a single metal construction plate, integrated in the cell stack to form the various functional elements. With 3D printing techniques, it is also conceivable that the isolator plate and one or more isolator frames are produced as a single plastic component, integrated in the cell stack to form the various functional elements.

Advantages of the electrolysis product gas generator according to each aspect of the invention are the ease and efficiency of use, the accurate production of on demand amounts, up to large amounts of product gas. Efficiency is e.g. improved due to the improved design of the electrolysis product gas generator, resulting in a reduction of leakage currents. Leakage currents are known to occur between cell stacks and are influenced by temperature, electrolyte conductivity and electrolyte currents. Because of these variations the power consumption is variable, as well as the product gas production. By reducing leakage currents the generation of product gas can be determined and controlled more accurately, increasing the options for use of the electrolysis product gas generator. For example the production can be continuously tuned in correspondence with the fuel consumption of an internal combustion engine, e.g. for propulsion of a vessel.

Advantages are achieved because the electrolyte is the more or less 'isolated' in a pocket, whereas in common embodiments the plate members of a cell stack are frequently immersed in electrolyte. As a result, the current leakage path CI is elongated, and current leakage via the electrolyte is minimized.

Another advantage of the 'isolated' electrolyte in the pocket of the spacer plate member is that the product gas generator is less sensitive to leaning over. The electrolyte can only leave and/ or enter the pocket of the spacer plate member via the product gas exit flue defined by the cut-out or edge notch in an upper region of the isolating frame of a reactor plate member, or the electrolyte inlet flue defined by the cut-out or edge notch in a lower region of the isolating frame of a reactor plate member. Upon leaning over, the electrolyte may undesirably enter the product gas exit flue. As this is only a small channel, a certain resistance has be overcome and this will not easily occur. As a result, spilling over electrolyte, in particular from one cell stack to another, is reduced. This makes the electrolysis product gas generator of the invention in particular suitable to be placed on unstable grounds, such as on board a vessel.

A further advantage of the invention is that the plate members and cell stacks enable a compact design of the product gas generator, which may allow for ease to assemble and disassemble for service, cleaning or recycling.

The electrolysis product gas generator of the invention comprises multiple cell stacks. Cell stacks may be interconnected in series or parallel allowing a variety of voltages to be applied. The specific reaction cell voltage is the applied voltage divided by the sum of the number of stacked reaction cells. The optimum reaction cell voltage depends on the further implemented chemical reaction characteristics.

The product gas generated with an electrolysis product gas generator according to the invention can be used for various purposes: reduction of fuel and emission, atmospheric air treatment, fuel renewal systems, etc. The product gas contains hydrogen gas and oxygen gas, but may possibly also comprise further structures, e.g. as a result of contamination of the water or as a result of the electrolysis, e.g. gases comprising hydrogen and/or oxygen atom structures. The product gas, which may also be referred to as catalyse gas, may advantageously be supplied as a catalyst or as an energy carrier, e.g. to industrial combustion engines, coal-fired power/generating stations, to the gas mains, welding installations, CH installations, as an additive to incinerators, pyrolysis installations, atmospheric oxygen refinement, etc., etc.

Advantageously, the electrolysis product gas generator of the invention has a significant gas generation rate, at least sufficient for large engines (e.g. for the propulsion of inland commercial cargo vessels). Supplying sufficient amounts product gas to a hydrocarbon fuel combustion device has advantages as enumerated above, amongst which there is energy savings. However, the generation of large amounts of product gas requires significant amounts of electricity added to the product gas generator. In order to save more energy than the electrolysis product gas generator uses the electrolysis product gas generator produces product gas very efficiently.

In embodiments of the invention, the isolator frame of the spacer plate member defines an upper edge of the pocket. Preferably, the upper edge of the pocket is inclined rising towards the right hand side of the pocket. Such an upper edge facilitates the collection of product gas towards the product gas exit flue.
In embodiments of the invention, the top edge product gas channel is embodied as a recessed portion of the top edge of the spacer plate member. In alternative, less advantageous embodiments, the top edge product gas channel is embodied as a cut-out channel in the spacer plate member.

In embodiments, the metal reactor plates in the windows of the first and second reactor plate members are at least as wide as the width of the pocket in the spacer plate member. Accordingly, the reactor plates remain fixed in place by the spacer plate members and the isolating frames of the reactor plates. Advantageously, the reactor plates are arranged with some play allowing them to vibrate to some extent, e.g. due to vibrations of the vessel on which the generator is present, to stimulate the generation of production gasses.

The dimensions of a reactor plate are preferably optimized in view of electrolyte/ product gas transport and product gas generation efficiency. Advantageously, the width : height ratio of a reactor plate, i.e. the electrochemical reactive area, is preferably 3:1, whereby the height is e.g. 50-80mm, preferably 55mm. The distribution length of the reactive electric current flux through the electrolyte depends on the further implemented chemical reaction characteristics.

The spacer plate member ensures a reaction distance between the reactor plates. Furthermore, the spacer plate member defines and encloses a pocket in which the electrolyte is 'isolated'. In embodiments, it is conceivable that the spacer plate member is not embodied as a distinct element but is integrated with an isolator/ conductor plate member and/ or with an isolating frame of a reactor plate member. This is e.g. facilitated due to 3D plastic printing techniques.

In embodiments, the metal reactor plates in the windows of the first and second reactor plate members have a thickness equal to the thickness of the surrounding isolator frame. Reactor plate members having a smaller thickness are also conceivable, which may be advantageous in view of compression during stacking.

In embodiments, the product gas generator comprises a first cell stack and an adjacent cell stack, wherein the conductive patch of the isolator/conductor plate member of first cell stack contacts a side region, preferably a corner region, of the reactor plate of the adjacent first reactor plate member, and wherein the conductive patch of the isolator/conductor plate member of the second cell stack contacts an opposed side region, preferably a diagonally opposed corner region, of the reactor plate of the adjacent second reactor plate member of the first cell stack. Such an opposed orientation is advantageous in view of the envisaged chemical reaction, as a distribution of electric current fluxes across the reacting plates is established and optimum use of the reaction cell is made possible. Embodiments are conceivable wherein the conductive patches engage linearly opposed regions, e.g. corner regions of the reactor plates.

In embodiments, the spacer plate member is symmetric about a central horizontal axis of symmetry thereof. This is advantageous in view of the assembly of a electrolysis product gas generator comprising multiple stacked reactor cells, each comprising a spacer member. A symmetric spacer plate member reduces the chance of assembly errors, as it is no longer possible to assemble a spacer plate member upside down.

In embodiments, said isolator/ conductor plate member is symmetric about a central horizontal axis of symmetry thereof. This is advantageous in view of the assembly of a electrolysis product gas generator comprising multiple stacked reactor cells, each comprising a isolator/ conductor member. A symmetric isolator/ conductor plate member reduces the chance of assembly errors, as it is no longer possible to assemble a isolator/ conductor plate member upside down.

In embodiments, the first and second reactor plate members are of identical design and each possess point symmetry about a central point of symmetry thereof. The identical design is advantageous in view of production costs, as it reduces the number of different construction parts. Furthermore, the point symmetry is also advantageous during the assembly of a electrolysis product gas generator, as it reduces the chance of assembly errors, as it is no longer possible to assemble a spacer plate member back-to-front.

The electrolyte preferably comprises distilled or demineralised water. The presence of other ions, such as commonly found in tap water will cause a drastic reduction in the product gas generator's efficiency and lifespan. A catalyst such as ionic salt may be added to the electrolyte to stimulate the electrochemical reaction. The acidic properties of such catalyst require resistant reactor plates. Advantageous materials applied in as a reactor plate material in an electrolysis product gas generator of the invention include titanium, platinum, molybdenum and stainless steel, e.g. 316 stainless steel.

The invention also relates to a system for generating a product gas containing hydrogen gas and oxygen gas on the basis of electrolysis of an aqueous electrolyte, e.g. said product gas to be supplied to a hydrocarbon fuel combusting device, e.g. an internal combustion engine, e.g. a diesel engine, e.g. for propulsion of an inland waterway cargo vessel, the system comprising:
- an electrolysis product gas generator as described herein,
- a vacuum pump connected via the product gas exhaust to the top edge product gas channels of all cell stacks and adapted to establish a partial vacuum therein.

The partial vacuum established with the vacuum pump is e.g. 0,6 bar. Such a partial vacuum is e.g. advantageous for the detection of leakage. Furthermore, such partial vacuum may improve gas production, in that the gas is earlier removed from plate, and may attribute to an improved accuracy and reaction capacity of the gas.

In embodiments, the system further comprises:
- an aqueous electrolyte storage vessel,
- a controlled feed assembly between said at least one storage vessel and the product gas generator adapted to feed said electrolyte to the generator.

In operation, the aqueous electrolyte is decomposed and hence used up/ consumed within the electrolyses process. A feed assembly assures the replenishment of electrolyte to the product gas generator. Advantageously, a controlled feed assembly is applied. In gas-operation the electrolyte level will stabilize in the pockets at a constant level. In embodiments, the electrolyte level is 5 +/-1 mm below the upper edges of the metal plates. This electrolyte level is advantageous in view of gas formation, and may even improve gas formation. In practical embodiments, the electrolyte level is e.g. 50 mm.

In embodiments, the controlled feed assembly is applied to control a wash cycle of the electrolysis product gas generator, during which contaminations are washed out throughout the entire electrolysis product gas generator.

In embodiments, the system further comprises a gas scrubber between the electrolysis gas generator and the vacuum pump, wherein the gas scrubber comprises:
- a reservoir containing a liquid, e.g. electrolyte,
- a product gas inlet that introduces product gas into said liquid,
- a product gas outlet above the liquid and connected to the vacuum pump.
Such a gas scrubber is used to remove any moist, in particular steam from the product gas.

In embodiments, the controlled feed assembly is applied to control a wash cycle of the electrolysis product gas generator, during which the electrolyte is washed throughout the entire electrolysis product gas generator, and possibly also through the gas scrubber.

The invention also relates to a hydrocarbon fuel combustion system, comprising:
- a hydrocarbon fuel combustion device, e.g. an internal combustion engine, e.g. a diesel engine,
- a product gas generator as described herein,
wherein product gas is supplied to the hydrocarbon fuel combustion device. In embodiments, the product gas is supplied to an air intake or intake of a manifold or cylinder of the hydrocarbon fuel combustion device.

In embodiments, furthermore a power supply control device is provided, operable to control the power supplied by the power supply in proportion to an amount of catalyst gas to be supplied to the hydrocarbon fuel combustion device. Accordingly, the amount of generated gas can be tailored to the demand of the hydrocarbon fuel combustion device. Advantageously, a safety mechanism is provided, operably connected to the power supply, so as to terminate power supply to the product gas generator when operation of the hydrocarbon fuel combustion device is stopped.

The invention also relates to an (inland waterway) cargo ship, having a ship propulsion engine with a hydrocarbon fuel combustion device and a electrolysis product gas generator according to any of claims 1-9, wherein product gas is supplied to the hydrocarbon fuel combustion device. It is in particular advantageous to retrofit such a cargo ship with an electrolysis product gas generator of the invention as this can improve its performance significantly.

The invention also relates to a method for generation of product gas containing hydrogen gas and oxygen gas on the basis of electrolysis of an aqueous electrolyte, wherein use is made of an electrolysis product gas generator according to any of claims 1-9.

The invention also relates to an electrolysis product gas generator for producing a product gas containing hydrogen gas and oxygen gas on the basis of electrolysis of an aqueous electrolyte,
said product gas generator comprising a tank having an electrolyte inlet and a product gas exhaust, and a power supply, wherein a row of multiple cell stacks is provided in said tank, each cell stack comprising a succession of vertically arranged plate members,
defining:
- first and second metal reactor plates
- a pocket filled with aqueous electrolyte so that the electrolyte is in contact with the adjacent first and second metal reactor plates of the cell stack, the pocket being in communication with the electrolyte inlet of the tank,
- an isolator plate with a window or edge notch in which a conductive patch is arranged at a location so as to be in contact with the adjacent first metal reactor plate of the cell stack and with the adjacent second metal reactor plate of an adjacent cell stack,
wherein each cell stack has a top edge and a bottom edge,
wherein each cell stack further comprises a bottom edge electrolyte channel extending along said bottom edge and distinct from said pocket, said bottom edge electrolyte channel being in communication with the electrolyte inlet of the tank,
wherein the cell stack has a cut-out or edge notch in a lower region thereof embodied to define a electrolyte inlet flue interconnecting the bottom edge electrolyte channel and an adjacent pocket,
wherein each cell stack has in a lower corner region thereof and in communication with the bottom edge electrolyte channel an electrolyte duct, which are in line with each other and in communication with said electrolyte inlet of said tank,
and wherein each cell stack has a top edge product gas channel extending along the top edge thereof and distinct from said pocket, the top edge product gas channel being in communication with the product gas exhaust of the tank,
wherein the cell stack has in an upper region thereof a product gas exit flue interconnecting an adjacent pocket and the top edge product gas channel,
wherein each cell stack has in an upper region thereof and in communication with the top edge product gas channel a product gas discharge, which product gas discharges are in line with each other and in communication with said product gas discharge of said tank, wherein - when an electric source is connected to the power supply of said product gas generator, so that electric current fluxes between the metal reactor plates through the electrolyte in the pocket - said electrolyte decomposes and resulting product gas exits said pocket of the cell stack via said product gas exit flue, said top edge product gas channel and said product gas discharge to said product gas exhaust of the tank.

The invention is further elucidated in relation to the drawings, in which:
Figs. 1a-1c show in a perspective view an electrolysis product gas generator in increasing detail,
Fig. 2 shows multiple cell stacks of the electrolysis product gas generator of fig. 1
Fig. 3 shows the multiple cell stacks of the electrolysis product gas generator of fig. 1 in a non-stacked configuration,
Fig. 4a shows an isolator/ conductor plate member in detail;
Fig. 4b shows a reactor plate member in detail,
Fig. 4c shows a spacer plate member in detail,
Fig. 4d shows different embodiments of reactor plates in detail,
Fig. 5 shows a portion of a cell stack in operation,
Fig. 6 schematically shows an embodiment of cell stacks according to the invention,
Fig. 7. shows a portion of an alternative embodiment of cell stack in operation,
Figs. 8a-8c. shows alternative plate member embodiments,
Figs. 9a-9c. shows alternative plate member embodiments.

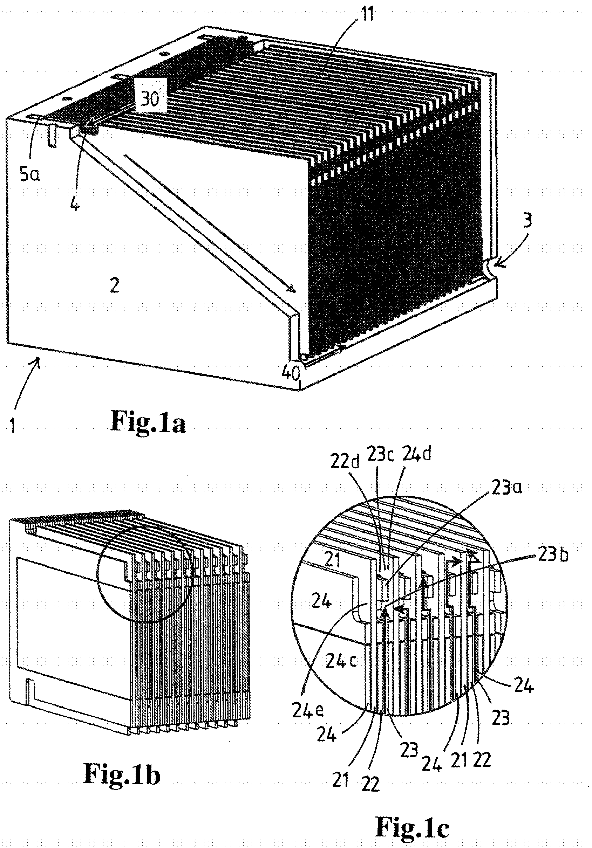

In fig. 1a an electrolysis product gas generator 1 according to an embodiment of the invention is shown. The electrolysis product gas generator 1 is adapted to produce a product gas containing hydrogen gas and oxygen gas on the basis of electrolysis of an aqueous electrolyte, e.g. containing demineralized water.

The product gas generator 1 comprises a tank 2, in fig. 1a only partially shown. In the shown embodiment, the tank 2 forms a box, surrounding multiple cell stacks 11 in said tank 2. The tank 2 has an electrolyte inlet 3 and a product gas exhaust 4. Furthermore, the tank 2 has connections for a power supply 5a. Said product gas can e.g. be supplied to a fuel combusting device, e.g. an internal hydrocarbon combustion engine, e.g. a diesel engine, e.g. for propulsion of an inland waterway cargo vessel.

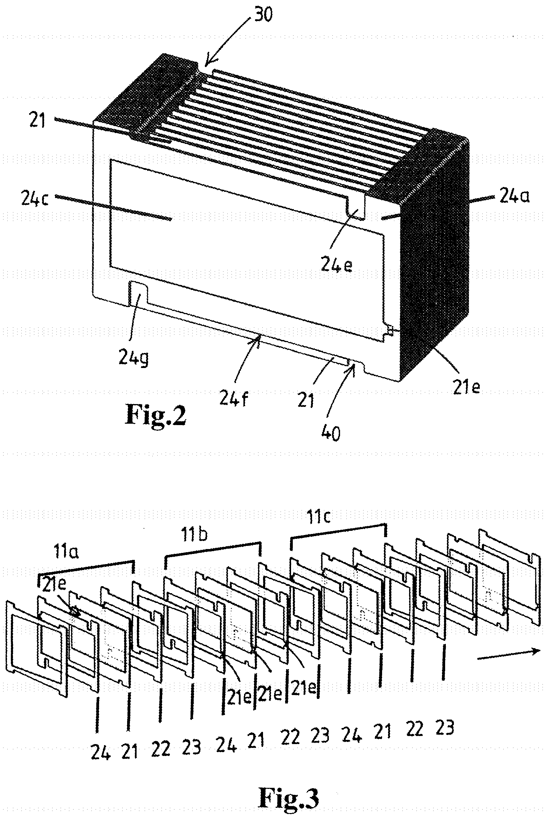

A cell stack 11 comprises vertically arranged plate members, together forming a reactor cell. As visible in figs. 2 and 3, each cell stack 11 includes in succession:
- an isolator/ conductor plate member 21;
- a first reactor plate member 22;
- a spacer plate member 23;
- a second reactor plate member 24.

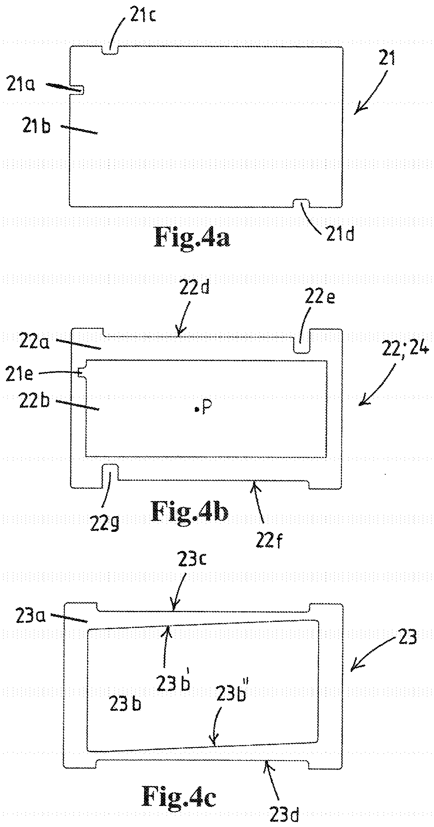

The isolator/conductor plate member 21 is shown in more detail in fig. 4a. The isolator plate member 21 has an isolator plate 21b, which is provided with a window or, in the shown embodiment, with an edge notch 21a in which a conductive patch is or can be arranged at a location so as to be in contact with the adjacent first reactor plate member 22 of the cell stack 11a and with the adjacent second reactor plate member 24 of an adjacent cell stack 11b.

According to a second aspect of the invention, the isolator plate member 21 has in an upper region thereof, here the left hand upper region, a cut-out or edge notch 21c remote from the window or edge notch 21a in which a conductive patch can be arranged. This cut-out or edge notch 21c is provided in communication with a top edge product gas channel and allows the passage of product gas.

According to a first aspect of the invention, the isolator plate member 21 has in a lower corner region thereof, here the right hand lower region, a cut-out or edge notch 21d remote from the window or edge notch 21a in which a conductive patch can be arranged. This cut-out or edge notch 21d is provided in communication with a bottom edge electrolyte channel and allows the passage of electrolyte.

In fig. 4b, a first or second reactor plate member 22, 24 is shown in more detail. In view of production efficiency, it is preferred, as is shown here, that the first and second reactor plate members are of the same design. In particular, it is preferred that the first and second reactor plate members 22; 24 are of identical design and possess point symmetry about a central point of symmetry P thereof. Each reactor plate member 22 has an isolating frame 22a surrounding a window 22b.

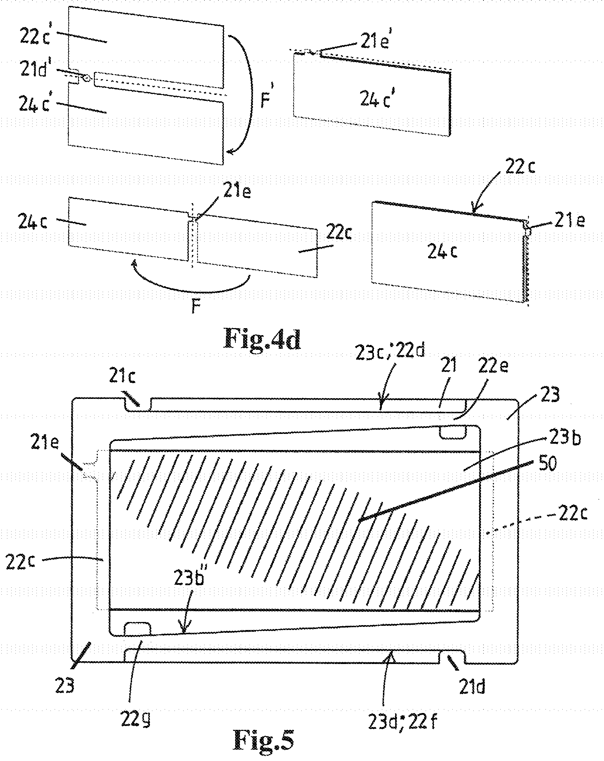

In fig. 4d, two different embodiments of sets of metal reactor plates 22c, 24c are shown. In the left bottom part of fig. 4d, the metal reactor plates 22c, 24c and a conductive patch 21e therebetween is shown in unassembled configuration. These metal reactor plates 22c, 24c, e.g. made of stainless steel are to be arranged in said windows 22b, 24b of the first and second reactor plate members 22, 24. The conductive patch 21e is to be arranged over edge notch 21a in the isolator/ conductor plate member 21, creating an electric contact between an adjacent first reactor plate member 22 of a cell stack and with an adjacent second reactor plate member 24 of an adjacent cell stack. In the right bottom part of fig. 4d, the metal reactor plates 22c, 24c are folded in a direction F over the conductive patch 21e, to be placed over an isolator plate member.

In the upper part of fig. 4d, an alternative embodiment of a set of metal reactor plates 22c', 24c' is shown, with therebetween a conductive patch 21e'. In the right upper part of fig. 4d, the metal reactor plates 22c', 24c' are folded in a direction F' over the conductive patch 21e', to be placed over an isolator plate member. Such an isolator plate member has a configuration different from that of fig. 4a, but is provided with an edge notch in a left upper part thereof, in which conductive patch 21e' can be arranged, so as to be in contact with the adjacent metal reactor plate 22c' of a cell stack and with the adjacent metal reactor plate 24c' of an adjacent cell stack.

In operation, an electric source (not shown) is connected to the power supply 5a of said product gas generator 1, in contact with such a metal reactor plate 22c, 24c or conductive patch 21e, so that electric current fluxes between the metal reactor plates in the windows of the first and second reactor plate members.

In fig. 4c, a spacer plate member 23 is shown in more detail. The spacer plate member, having a width of e.g. 1,2 - 1,5 mm, has an isolating frame 23a defining a pocket in said spacer plate member, wherein the pocket is filled with aqueous electrolyte so that the electrolyte is in contact with the adjacent first and second metal reactor plates of the cell stack, the pocket being in communication with the electrolyte inlet of the tank.

In the shown embodiment, the isolator frame 23a of the spacer plate member 23 defines an inclined upper edge 23b' of the pocket 23b rising towards the righthand side of the pocket to facilitate collection of product gas towards the product gas exit flue, formed by cut-out or edge notch 22e in an adjacent reactor plate member.

According to the second aspect of the invention, the spacer plate member 23 has a top edge product gas channel 23c extending along said top edge and separated and distinct from said pocket 23b. This top edge product gas channel 23c is in communication with the product gas exhaust 4 of the tank 2. In the shown embodiment, the top edge product gas channel 23c is embodied as a recessed portion of said top edge.

In the shown embodiment, according to a possible embodiment of the second aspect of the invention, both reactor plate members 22; 24 of fig. 4b comprise a cut-out or edge notch 22e in an upper region, here the right-hand upper corner region, of the isolating frame 22a thereof. The cut-out or edge notch 22e is embodied to define a product gas exit flue interconnecting a pocket 23b in an adjacent spacer plate member and the top edge product gas channel 23c thereof. In the shown embodiment, as is preferred, the product gas exit flue is vertically orientated. In less preferred embodiments the cut-out or edge notch is provided in the right hand side region and the product gas exit flue is horizontally orientated. As gas flows upwards, the product gas exit flue is advantageously provided in an upper region. Embodiments are also conceivable wherein only one of the reactor plate members is provided with a cut-out or edge notch 22e defining a product gas exit flue.

According to the second aspect of the invention, the first and second reactor plate members of the same cell stack also each have in an upper region thereof a cut-out or edge notch 22d in the isolating frame 22a, which cut-outs or edge notches 22d in the upper corner region are aligned with the cut-out or edge notch 21c in the isolator plate member and are in communication with the top edge product gas channel 23c to form a product gas discharge 30, in communication with the product gas exhaust 4 of the tank 2.

Here, the edge notch 22d forms part of a product gas channel, together with the top edge product gas channel 23c in the spacer plate member. Alternatively, the product gas channel is only formed by the top edge product gas channel 23c in the spacer plate member, and the cut-out or edge notch 22d is embodied similar to cut-out or edge notch 22e and cut-out or edge notch 21c of the isolator plate 21, allowing the product gas to be removed from the product gas channel 23c.

Or, the product channel is only formed by the top edge product gas channel 22d in the isolating frame, and the cut-out or edge notch 23c is embodied similar to cut-out or edge notches 21c of the isolator plate 21, allowing the product gas to be removed from the product gas channel 22d.

Furthermore, it is noted that in this embodiment, as is preferred, the cut-out or edge notches 22d of the reactor plate members that are aligned with the cut-out or edge notch 21c of the isolator plate member are at a distance from the cut-out or edge notches 22e of the reactor plate members that from the product gas exit flues.

The operation of the product gas generator is shown in more detail in figs. 1b and 1c. According to the second aspect of the invention, the product gas is generated adjacent the reactor plates 22c, 24c of the reactor plate members 22, 24. The generated product gasses tend to flow upwards and seek to escape the product gas generator. Because of the configuration of the electrolyte pocket 23b and adjacent reactor plate, the product gas can only escape the pocket 23b via a product gas exit flue generated by cut-out or edge notches 22e, 24e of the reactor plate members.

From these product gas exit flues, the product gas is led through a product gas channel, in the shown embodiment not only formed by product gas channels 23c at the upper end of the spacer plate member 23, but also by adjacent cut-out or edge notches 22d, 24d in the adjacent isolating frames of the first and second reactor plate members 22, 24.

The product gas channels extend between the product gas exit flues and a product gas discharge 30, in communication with the product gas exhaust 4. Product gas discharge 30 is formed by:
- cut-out or edge notches 21c in the isolator plate members 21,
- cut-out or edge notches 22d, 24d in the reaction plate members 22, 24,
- cut-out or edge notches 22e, 24e in the reaction plate members 22, 24,
- top edge product gas channel 23c in the spacer plate members 23.

Hence, the product gas path is elongated, resulting in a reduction of internal losses.

It is noted that excess electrolyte may follow the same path, via product gas exit flues, and the product gas channels to the product gas discharge 30. As visible in fig. 1a, an electrolyte overflow 31 may be provided in the tank, allowing the electrolyte to be re-introduced into the cell stack and not adversely effect the gas flow.

In embodiments, it is conceivable that electrolyte is mechanically or naturally forced to help sweeping the bubbles off the electrode's surface, e.g. by circulation or vibration.

According to the first aspect of the invention, the spacer plate member 23 has a bottom edge electrolyte channel 23d extending along the bottom edge thereof and separated and distinct from said pocket 23b. This bottom edge electrolyte channel 23d is in communication with the electrolyte inlet 3 of the tank 2. In the shown embodiment, the bottom edge electrolyte channel 23d is embodied as a recessed portion of said bottom edge.

In the shown embodiment, according to a possible embodiment of the first aspect of the invention, both reactor plate members 22; 24 of fig. 4b comprise a cut-out or edge notch 22g in a bottom region, here the left-hand bottom corner region, of the isolating frame 22a thereof. The cut-out or edge notch 22g is embodied to define a electrolyte inlet flue interconnecting the bottom edge electrolyte channel 23d and the pocket 23b in an adjacent spacer plate member thereof. In the shown embodiment, the electrolyte flue is vertically orientated. Alternatively, the electrolyte inlet flue is horizontally orientated. Embodiments are also conceivable wherein only one of the reactor plate members is provided with a cut-out or edge notch 22g defining an electrolyte inlet flue.

According to the first aspect of the invention, the first and second reactor plate members of the same cell stack also each have in an lower region thereof a cut-out or edge notch 22f in the isolating frame 22a, which cut-outs or edge notches 22f in the lower corner region are aligned with the cut-out or edge notch 21d in the isolator plate member and are in communication with the bottom edge electrolyte channel 23d to form an electrolyte duct 40, in communication with the electrolyte inlet 3 of the tank 2.

Here, the edge notch 22f forms part of an electrolyte channel, together with the bottom edge electrolyte channel 23d in the spacer plate member 23. Alternatively, the electrolyte channel is only formed by bottom edge electrolyte channel 23d in the spacer plate member, and the cut-out or edge notch 22f is embodied similar to cut-out 22g and edge notch 21d of the isolator plate 21, allowing the electrolyte to be introduced into bottom edge electrolyte channel 23d.

Or, the electrolyte channel is only formed by the bottom edge electrolyte channel 22f in the isolating frame, and the cut-out or edge notch 23d is embodied similar to cut-out or edge notches 21d of the isolator plate 21, allowing the electrolyte to be introduced into the bottom edge electrolyte channel 22f.

Furthermore, it is noted that in this embodiment, as is preferred, the cut-out or edge notches 22f of the reactor plate members that are aligned with the cut-out or edge notch 21d of the isolator plate member are at a distance from the cut-out or edge notches 22g of the reactor plate members that from the electrolyte inlet flues.

According to the first aspect of the invention, the electrolyte is introduced into the tank via electrolyte inlet 3 and subsequently allowed to flow through electrolyte duct 40 formed by:
- cut-out or edge notches 21d in the isolator plate members,
- cut-out or edge notches 22f in the isolating frames of the first and second reactor plate members;
- cut-out or edge notches 22g in the isolating frames of the first and second reactor plate members;
- bottom edge electrolyte channel 23d in the spacer plate members 23.

From this electrolyte duct 40, the electrolyte is allowed to enter a pocket 23b defined by the spacer plate members 23 of a cell stack via the electrolyte channel 23d at the bottom edge of the spacer plate members 23 via an electrolyte inlet flue formed by cut-out or edge notch 22g in an adjacent reactor plate member.

Hence, the electrolyte path from pocket to pocket is elongated, resulting in a reduced occurrence of current leakage.

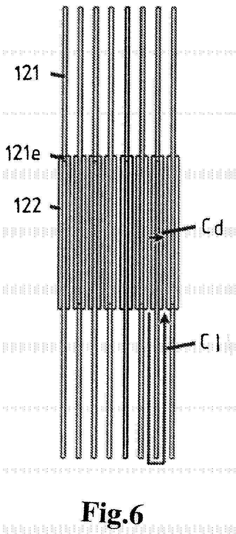

As indicated above, an advantage of this configuration of a cell stack is the reduction of leakage currents. In particular when the embodiment of fig. 6 is reviewed, with an isolator plate 121 of enlarged dimensions, and furthermore reactor plate member 122 and conductive patch 121e, it is evident that the current leakage path CI is elongated, and maximized in this design, resulting in minimized current leakage.

The cell stack design with the conductive patch 121e between reactor plat members maximizes current flow from reactor plate to reactor plate, as the current distance Cd is minimized.

As a result of this minimizing Cd and maximizing CI the occurrence of current leakage is reduced, or even eliminated. As a result, - when an electric source is connected to the power supply of said product gas generator only electric current fluxes occur between the metal reactor plates in the windows of the first and second reactor plate members through the electrolyte in the pocket. As a result of this electric current flux said electrolyte decomposes and resulting product gas exits said pocket of the cell stack via said product gas exit flue.

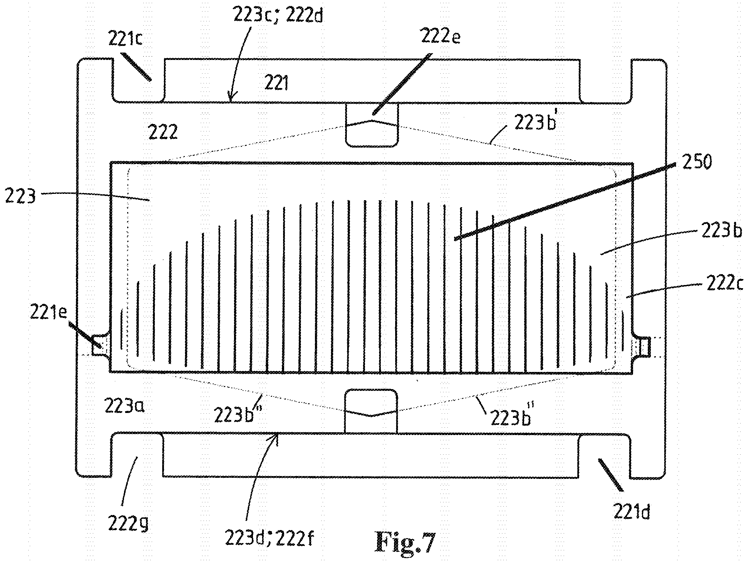

In fig. 5, part of a cell stack is visible in cross-section. In fig. 7, the same view on an alternative cell stack is presented, in which same components have the same reference number to which 200 is added. An isolator/ conductor plate member 21; 221, reactor plate member 22; 222 and spacer plate member 23; 223 are positioned on top of each other.

In fig. 5, spacer plate member 23, comprises pocket 23b and inclined upper edge 23b' of the pocket 23b rising towards the righthand side of the pocket is visible in its entirety. In dotted lines, the product gas exit flue formed by cut-out or edge notch 22e in adjacent reactor plate member 22 is visible, towards the inclined upper edge 23b' is inclined, to facilitate collection of product gas.
In fig. 7, spacer plate member 223 comprises pocket 223b and a tapering upper edge 223b' of the pocket 223b rising towards the central upper side of the pocket towards the product gas exit flue formed by cut-out or edge notch 222e in adjacent reactor plate member 222, to facilitate collection of product gas.

Furthermore, overlapping top edge product gas channel 23c;223c and cut-out or edge notch 22d;222d in the isolating frame of the reactor plate member 22;222 is visible, as well as the alignment with cut-out or edge notch 21c; 221c in the isolator plate member 21;221.

In this embodiment, likewise, it is visible that pocket 23b; 223b has an inclined bottom edge 23b"; 223b" lowering towards the lefthand side and central bottom side respectively, of the pocket is visible. This facilitates the introduction of electrolyte via the electrolyte inlet flue. In dotted lines, the electrolyte inlet flue formed by cut-out or edge notch 22g; 222g in adjacent reactor plate member 22; 222 is visible, towards the inclined bottom edge 23b"; 223b" is inclined. The symmetrical lay-out of spacer plate member 23; 223 about a central horizontal axis of symmetry thereof is advantageous in view of ease of production and assembly.

Furthermore, overlapping bottom edge electrolyte channel 23d; 223d and cut-out or edge notch 22f; 222f in the isolating frame of the reactor plate member 22; 222 are visible, as well as the alignment with cut-out or edge notch 21d; 221d in the isolator plate member 21; 221. In view of the assembly, it is advantageous, as visible in fig. 5, that the width of the metal reactor plates 22c of the reactor plate member 22 exceeds the width of the pocket 23b in the spacer plate member 23.

In the embodiment of fig. 5, the conductive patch 21e of the isolator/conductor plate member 21 of the shown cell stack contacts a corner region of the reactor plate of the adjacent reactor plate member 22. Advantageously, as visible in fig. 5, the conductive patch of the isolator/conductor plate member of the adjacent cell stack contacts a diagonally opposed corner region of the reactor plate member, resulting in a diagonally extending electric current flux 50.

This preferred aspect of the invention is also visible in fig. 3, wherein the product gas generator comprises a first cell stack 11a and an adjacent cell stack (11b), wherein the conductive patch 21e of the isolator/conductor plate member 21 of first cell stack 11a contacts a corner region of the reactor plate of the adjacent first reactor plate member 22 and wherein the conductive patch 21e of the isolator/conductor plate member 21 of the second cell stack 11b contacts a diagonally opposed corner region of the reactor plate of the adjacent second reactor plate member 24 of the second cell stack.

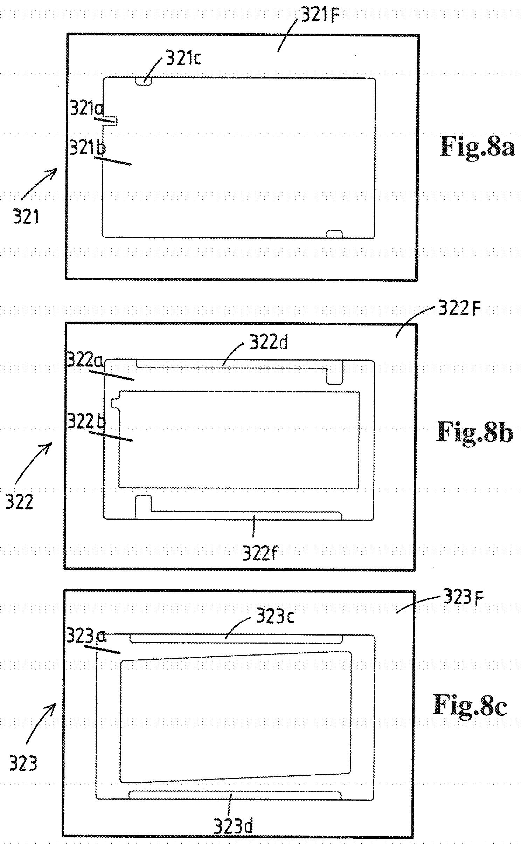

In figs. 8a-8c, alternative embodiments of an isolator/ conductor plate member 321, a reactor plate member 322 and a spacer plate member 323 are shown. Same elements are given same reference numerals as in figs. 4a-4c, to which '300' is added. The plate members are now embedded in a frame 321F, 322F, 323F respectively. These frames cover the cut-out or edge notches and channels, which cut-out or edge notches still form a duct together to the electrolyte inlet and/or product gas exhaust of the tank.

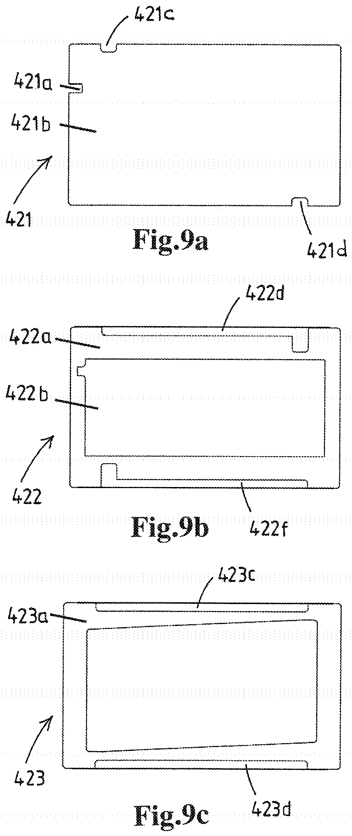

In figs. 9a-9c, yet alternative embodiments of an isolator/ conductor plate member 421, a reactor plate member 422 and a spacer plate member 423 are shown. Same elements are given same reference numerals as in figs. 4a-4c, to which '400' is added. In this embodiment, the bottom edge electrolyte channel 423d and product gas channel 423c, as well as cut-out or edge notches 422d, 422f are closed. The electrolyte is able to enter the channel, and the product gas able to exit the channel, via the cut-out or edge notches 421c in the isolator plate member 421.

## Claims

1. Electrolysis product gas generator (1) for producing a product gas containing hydrogen gas and oxygen gas on the basis of electrolysis of an aqueous electrolyte,
said product gas generator comprising a tank (2) having an electrolyte inlet (3) and a product gas exhaust (4), and a power supply (5a), wherein a row of multiple cell stacks (11a; 11b; 11c) is provided in said tank, each cell stack (11) being composed of vertically arranged plate members, including in succession:
- an isolator/ conductor plate member (21);
- a first reactor plate member (22);
- a spacer plate member (23);
- a second reactor plate member (24);
wherein the isolator/conductor plate member (21) has an isolator plate (21b) with a window or edge notch (21a) in which a conductive patch (21e) is arranged at a location so as to be in contact with the adjacent first reactor plate member of the cell stack and with the adjacent second reactor plate member of an adjacent cell stack,
wherein the first and second reactor plate members (22; 24) each have an isolating frame (22a) surrounding a window (22b) and a metal reactor plate (22c 24c) arranged in said window,
wherein the spacer plate member (23) has an isolating frame (23a) defining a pocket (23b) in said spacer plate member,
wherein the pocket is filled with aqueous electrolyte so that the electrolyte is in contact with the adjacent first and second metal reactor plates of the cell stack, the pocket being in communication with the electrolyte inlet of the tank,
wherein each plate member (21, 22, 23, 24) has a top edge and a bottom edge,
wherein each spacer plate member (23) further comprises a bottom edge electrolyte channel (23d) extending along said bottom edge and distinct from said pocket (23b), said bottom edge electrolyte channel being in communication with the electrolyte inlet (3) of the tank (2), wherein the first reactor plate member has a cut-out or edge notch (22g) in a lower region of the isolating frame thereof embodied to define an electrolyte inlet flue interconnecting the bottom edge electrolyte channel (23d) and the pocket in the adjacent spacer plate member,
wherein the isolator plate member (21) has in a lower corner region thereof a cut-out or edge notch (21d) remote from the window or edge notch in which a conductive patch is arranged, and wherein the first and second reactor plate members of the same cell stack also each have in the lower region thereof a cut-out or edge notch (22f) in the isolating frame thereof, which cut-outs or edge notches in the lower region are all aligned with one another and are in communication with the bottom edge electrolyte channel (23d) to form an electrolyte duct (40) to said electrolyte inlet (3) of said tank (2).

2. Electrolysis product gas generator (1) for producing a product gas containing hydrogen gas and oxygen gas on the basis of electrolysis of an aqueous electrolyte,
said product gas generator comprising a tank (2) having an electrolyte inlet (3) and a product gas exhaust (4), and a power supply (5a), wherein a row of multiple cell stacks (11a; 11b; 11c) is provided in said tank, each cell stack (11) being composed of vertically arranged plate members, including in succession:
- an isolator/ conductor plate member (21);
- a first reactor plate member (22);
- a spacer plate member (23);
- a second reactor plate member (24);
wherein the isolator/conductor plate member (21) has an isolator plate (21b) with a window or edge notch (21a) in which a conductive patch (21e) is arranged at a location so as to be in contact with the adjacent first reactor plate member of the cell stack and with the adjacent second reactor plate member of an adjacent cell stack,
wherein the first and second reactor plate members (22; 24) each have an isolating frame (22a) surrounding a window (22b) and a metal reactor plate (22c 24c) arranged in said window,
wherein the spacer plate member (23) has an isolating frame (23a) defining a pocket (23b) in said spacer plate member,
wherein the pocket is filled with aqueous electrolyte so that the electrolyte is in contact with the adjacent first and second metal reactor plates of the cell stack, the pocket being in communication with the electrolyte inlet of the tank,
wherein each plate member (21, 22, 23, 24) has a top edge and a bottom edge,
preferably according to the preceding claim,
wherein the spacer plate member (23) has a top edge product gas channel (23c) extending along the top edge thereof and distinct from said pocket, the top edge product gas channel being in communication with the product gas exhaust of the tank,
wherein the first reactor plate member has a cut-out or edge notch (22e) in an upper region of the isolating frame thereof embodied to define a product gas exit flue interconnecting the pocket (23b) in the adjacent spacer plate member (23) and the top edge product gas channel (23c) thereof,
wherein the isolator plate member (21) has in an upper region thereof a cut-out or edge notch (21c) remote from the window or edge notch (21a) in which a conductive patch is arranged, and wherein the first and second reactor plate members of the same cell stack also each have in the upper region thereof a cut-out or edge notch (22d) in the isolating frame, which cut-outs or edge notches in the upper region are all aligned with one another and are in communication with the top edge product gas channel (23c) to form a product gas discharge (30),
wherein - when an electric source is connected to the power supply (5a) of said product gas generator (1), so that electric current fluxes between the metal reactor plates in the windows of the first and second reactor plate members through the electrolyte in the pocket - said electrolyte decomposes and resulting product gas exits said pocket of the cell stack via said product gas exit flue, said top edge product gas channel (23c) and said product gas discharge (30) to said product gas exhaust (4) of the tank.

3. Electrolysis product gas generator according to any of the preceding claims, wherein the product gas generator comprises a first cell stack (11a) and an adjacent cell stack (11b),
wherein the conductive patch of the isolator/conductor plate member of first cell stack (11a) contacts a side region of the reactor plate of the adjacent first reactor plate member (22), and wherein the conductive patch of the isolator/conductor plate member of the second cell stack contacts an opposed side region of the reactor plate of the adjacent second reactor plate member (24) of the first cell stack (11a).

4. Electrolysis product gas generator according to any of the preceding claims, wherein the metal reactor plates (22c, 24c) of the first and second reactor plate members are at least as wide as the width of the pocket (23b) in the spacer plate member (23).

5. Electrolysis product gas generator according to any of the preceding claims, wherein the metal reactor plates (22c, 24c) in the windows of the first and second reactor plate members (22, 24) have a thickness equal to or slightly smaller than the thickness of the surrounding isolator frame (22a, 24a).

6. Electrolysis product gas generator according to any of the preceding claims, wherein the isolator frame (23a) of the spacer plate member (23) defines a lower and/or upper edge (23b'; 23b") of the pocket to facilitate the introduction of electrolyte via the electrolyte inlet flue and/ or the collection of product gas towards the product gas exit flue.

7. Electrolysis product gas generator according to any of the preceding claims, wherein the bottom edge electrolyte channel (23d) and/ or the top edge product gas channel (23c) is embodied as a recessed portion of the bottom and/ or top edge of the spacer plate member (23).

8. Electrolysis product gas generator according to any of the preceding claims, wherein said spacer plate member (23) is symmetric about a central horizontal axis of symmetry thereof.

9. Electrolysis product gas generator according to any of the preceding claims, wherein the first and second reactor plate members (22; 24) are of identical design and possess point symmetry about a central point of symmetry (P) thereof.

10. System for generating a product gas containing hydrogen gas and oxygen gas on the basis of electrolysis of an aqueous electrolyte, e.g. said product gas to be supplied to a hydrocarbon fuel combusting device, e.g. an internal combustion engine, e.g. a diesel engine, e.g. for propulsion of an inland waterway cargo vessel, the system comprising:
- an electrolysis product gas generator (1) according to any of claims 1-9,
- a vacuum pump connected via the product gas exhaust (4) and product gas discharge (30) to the top edge product gas channels (23c) of all cell stacks and adapted to establish a partial vacuum therein.

11. System according to claim 10, further comprising:
- an aqueous electrolyte storage vessel,
- a controlled feed assembly between said at least one storage vessel and the product gas generator adapted to feed said electrolyte to the generator.

12. System according to any of the preceding claims 10-11, further comprising a gas scrubber between the electrolysis gas generator and the vacuum pump, wherein the gas scrubber comprises:
- a reservoir containing a liquid, e.g. electrolyte,
- a product gas inlet that introduces product gas into said liquid,
- a product gas outlet above the liquid and connected to the vacuum pump.

13. Hydrocarbon fuel combustion system, comprising:
- a hydrocarbon fuel combustion device, e.g. an internal combustion engine, e.g. a diesel engine,
- a product gas generator according to any of the preceding claims 1-9,
wherein product gas is supplied to the hydrocarbon fuel combustion device.

14. Cargo ship, in particular an inland waterway cargo ship, having a ship propulsion engine with a hydrocarbon fuel combustion device and a electrolysis product gas generator according to any of the preceding claims 1-9, wherein product gas is supplied to the hydrocarbon fuel combustion device.

15. Method for generation of product gas containing hydrogen gas and oxygen gas on the basis of electrolysis of an aqueous electrolyte, wherein use is made of an electrolysis product gas generator according to any of claims 1-9.

## Patentansprüche

1. Elektrolyseproduktgasgenerator (1) zur Herstellung eines Produktgases, welches Wasserstoffgas und Sauerstoffgas enthält, auf der Basis einer Elektrolyse eines wässrigen Elektrolyten,
wobei der Produktgasgenerator einen Tank (2) mit einem Elektrolyteinlass (3) und einem Produktgasauslass (4) und eine Stromversorgung (5a) umfasst, wobei in dem Tank eine Reihe von mehreren Zellstapeln (11a; 11b; 11c) vorgesehen ist, wobei jeder Zellstapel (11) aus vertikal angeordneten Plattenelementen gebildet ist, welche nacheinander aufweisen:
- ein Isolator/Leiterplattenelement (21);
- ein erstes Reaktorplattenelement (22);
- ein Abstandsplattenelement (23);
- ein zweites Reaktorplattenelement (24);
wobei das Isolator/Leiterplattenelement (21) eine Isolatorplatte (21b) mit einem Fenster oder einer Randaussparung (21a) aufweist, in welcher ein leitfähiger Fleck (21e) an einer Stelle so angeordnet ist, dass er mit dem benachbarten ersten Reaktorplattenelement des Zellstapels und mit dem benachbarten zweiten Reaktorplattenelement eines benachbarten Zellstapels in Kontakt ist,
wobei das erste und zweite Reaktorplattenelement (22; 24) jeweils einen Isolationsrahmen (22a), welcher ein Fenster (22b) umgibt, und eine Metallreaktorplatte (22c, 24c), welche in dem Fenster angeordnet ist, aufweisen,
wobei das Abstandsplattenelement (23) einen Isolationsrahmen (23a) aufweist, welcher eine Tasche (23b) in dem Abstandsplattenelement definiert,
wobei die Tasche mit wässrigem Elektrolyt gefüllt ist, sodass der Elektrolyt in Kontakt mit der benachbarten ersten und zweiten Metallreaktorplatte des Zellstapels ist, wobei die Tasche in Verbindung mit dem Elektrolyteinlass des Tanks steht, wobei jedes Plattenelement (21, 22, 23, 24) einen oberen Rand und einen unteren Rand aufweist,
wobei jedes Abstandsplattenelement (23) ferner einen Unterkantenelektrolytkanal (23d) umfasst, welcher sich entlang dem unteren Rand und abgegrenzt von der Tasche (23b) erstreckt, wobei der Unterkantenelektrolytkanal mit dem Elektrolyteinlass (3) des Tanks (2) in Verbindung steht,
wobei das erste Reaktorplattenelement einen Ausschnitt oder eine Randaussparung (22g) in einem unteren Bereich des Isolationsrahmens davon aufweist, der bzw. die ausgebildet ist, um einen Elektrolyteinlasszug zu definieren, welcher den Unterkantenelektrolytkanal (23d) und die Tasche in dem benachbarten Abstandsplattenelement verbindet,
wobei das Isolatorplattenelement (21) in einem unteren Eckbereich davon einen Ausschnitt oder eine Randaussparung (21d) aufweist, der bzw. die von dem Fenster oder der Randaussparung entfernt ist, in dem bzw. der ein leitfähiger Fleck angeordnet ist, und
wobei die ersten und zweiten Reaktorplattenelemente desselben Zellstapels auch jeweils in dem unteren Bereich davon einen Ausschnitt oder eine Randaussparung (22f) in dem Isolationsrahmen davon aufweisen, wobei die Ausschnitte oder Randaussparungen in dem unteren Bereich alle zueinander ausgerichtet sind und mit dem Unterkantenelektrolytkanal (23d) in Verbindung stehen, um einen Elektrolytdurchgang (40) zu dem Elektrolyteinlass (3) des Tanks (2) zu bilden.

2. Elektrolyseproduktgasgenerator (1) zur Herstellung eines Produktgases, welches Wasserstoffgas und Sauerstoffgas enthält, auf der Basis einer Elektrolyse eines wässrigen Elektrolyten,
wobei der Produktgasgenerator einen Tank (2) mit einem Elektrolyteinlass (3) und einem Produktgasauslass (4) und eine Stromversorgung (5a) umfasst, wobei in dem Tank eine Reihe von mehreren Zellstapeln (11a; 11b; 11c) vorgesehen ist, wobei jeder Zellstapel (11) aus vertikal angeordneten Plattenelementen gebildet ist, welche nacheinander aufweisen:
- ein Isolator/Leiterplattenelement (21);
- ein erstes Reaktorplattenelement (22);
- ein Abstandsplattenelement (23);
- ein zweites Reaktorplattenelement (24);
wobei das Isolator/Leiterplattenelement (21) eine Isolatorplatte (21b) mit einem Fenster oder einer Randaussparung (21a) aufweist, in der ein leitfähiger Fleck (21e) an einer Stelle so angeordnet ist, dass er mit dem benachbarten ersten Reaktorplattenelement des Zellstapels und dem benachbarten zweiten Reaktorplattenelement eines benachbarten Zellstapels in Kontakt ist,
wobei das erste und zweite Reaktorplattenelement (22; 24) jeweils einen Isolationsrahmen (22a), der ein Fenster (22b) umgibt, und eine in dem Fenster angeordnete Metallreaktorplatte (22c, 24c) aufweisen,
wobei das Abstandsplattenelement (23) einen Isolationsrahmen (23a) aufweist, welcher eine Tasche (23b) in dem Abstandsplattenelement definiert,
wobei die Tasche mit wässrigem Elektrolyt gefüllt ist, sodass der Elektrolyt in Kontakt mit der benachbarten ersten und zweiten Metallreaktorplatte des Zellstapels ist, wobei die Tasche mit dem Elektrolyteinlass des Tanks in Verbindung steht, wobei jedes Plattenelement (21, 22, 23, 24) einen oberen Rand und einen unteren Rand aufweist,
vorzugsweise nach dem vorhergehenden Anspruch,
wobei das Abstandsplattenelement (23) einen Oberkantenproduktgaskanal (23c) aufweist, welcher sich entlang dem oberen Rand davon und abgegrenzt von der Tasche erstreckt, wobei der Oberkantenproduktgaskanal in Verbindung mit dem Produktgasauslass des Tanks steht,
wobei das erste Reaktorplattenelement einen Ausschnitt oder eine Randaussparung (22e) in einem oberen Bereich des Isolationsrahmens davon aufweist, welcher bzw. welche ausgebildet ist, um einen Produktgaszug zu definieren, welcher die Tasche (23b) in dem benachbarten Abstandsplattenelement (23) und den Oberkantenproduktgaskanal (23c) davon verbindet,
wobei das Isolatorplattenelement (21) in einem oberen Bereich davon einen Ausschnitt oder eine Randaussparung (21c) aufweist, welcher bzw. welche von dem Fenster oder der Randaussparung (21a), in welchem bzw. welcher ein leitfähiger Fleck angeordnet ist, entfernt ist, und wobei das erste und zweite Reaktorplattenelement desselben Zellstapels auch jeweils in dem oberen Bereich davon einen Ausschnitt oder eine Randaussparung (22d) in dem Isolatorrahmen aufweisen, wobei die Ausschnitte oder Randaussparungen in dem oberen Bereich alle zueinander ausgerichtet sind und mit dem Oberkantenproduktgaskanal (23c) in Verbindung stehen, um eine Produktgasableitung (30) zu bilden,
wobei - wenn eine elektrische Quelle mit der Stromversorgung (5a) des Produktgasgenerators (1) verbunden ist, sodass ein elektrischer Strom zwischen den Metallreaktorplatten in den Fenstern des ersten und zweiten Reaktorplattenelements durch den Elektrolyt in der Tasche fließt - der Elektrolyt zerfällt und das resultierende Produktgas aus der Tasche des Zellstapels über den Produktgasaustrittszug, den Oberkantenproduktgaskanal (23c) und die Produktgasableitung (30) an dem Produktgasauslass (4) des Tanks austritt.

3. Elektrolyseproduktgasgenerator nach einem der vorhergehenden Ansprüche, wobei der Produktgasgenerator einen ersten Zellstapel (11a) und einen benachbarten Zellstapel (11b) umfasst,
wobei der leitende Fleck des Isolator/Leiterplattenelements des ersten Zellstapels (11a) einen Seitenbereich der Reaktorplatte des benachbarten ersten Reaktorplattenelements (22) kontaktiert,
und wobei der leitende Fleck des Isolator/Leiterplattenelements des zweiten Zellstapels einen gegenüberliegenden Seitenbereich der Reaktorplatte des benachbarten zweiten Reaktorplattenelements (24) des ersten Zellstapels (11a) kontaktiert.

4. Elektrolyseproduktgasgenerator nach einem der vorhergehenden Ansprüche, wobei die Metallreaktionsplatten (22c, 24c) des ersten und zweiten Reaktorplattenelements mindestens so breit sind wie die Breite der Tasche (23b) in dem Abstandsplattenelement (23).

5. Elektrolyseproduktgasgenerator nach einem der vorhergehenden Ansprüche, wobei die Metallreaktorplatten (22c, 24c) in den Fenstern des ersten und zweiten Reaktorplattenelements (22, 24) eine Dicke aufweisen, die gleich oder etwas kleiner als die Dicke des umgebenden Isolatorrahmens (22a, 24a) ist.

6. Elektrolyseproduktgasgenerator nach einem der vorhergehenden Ansprüche, wobei der Isolatorrahmen (23a) des Abstandsplattenelements (23) einen unteren und/oder oberen Rand (23b'; 23b'') der Tasche definiert, um die Einführung von Elektrolyt über den Elektrolyteinlasszug und/oder die Sammlung von Produktgas in Richtung des Produktgasauslasszugs zu ermöglichen.

7. Elektrolyseproduktgasgenerator nach einem der vorhergehenden Ansprüche, wobei der Unterkantenelektrolytkanal (23d) und/oder der Oberkantenproduktgaskanal (23c) als ausgesparter Abschnitt des unteren und/oder oberen Rands von dem Abstandsplattenelement (23) ausgestaltet ist.

8. Elektrolyseproduktgasgenerator nach einem der vorhergehenden Ansprüche, wobei das Abstandsplattenelement (23) symmetrisch um eine zentrale horizontale Symmetrieachse davon ist.

9. Elektrolyseproduktgasgenerator nach einem der vorhergehenden Ansprüche, wobei das erste und zweite Reaktorplattenelement (22; 24) identisch ausgestaltet sind und eine Punktsymmetrie um einen zentralen Symmetriepunkt (P) davon aufweisen.

10. System zum Erzeugen eines Produktgases, welches Wasserstoffgas und Sauerstoffgas enthält, auf der Grundlage einer Elektrolyse eines wässrigen Elektrolyten, z.B. des Produktgases, welches einer Kohlenwasserstoffkraftstoff-Verbrennungsvorrichtung, z.B. einem Verbrennungsmotor, z.B. einem Dieselmotor, zugeführt wird, z.B. zum Antrieb eines Binnenwasserwegfrachtschiffes, wobei das System umfasst:
- einen Elektrolyseproduktgasgenerator (1) nach einem der Ansprüche 1-9,
- eine Vakuumpumpe, welche über den Produktgasauslass (4) und die Produktgasableitung (30) mit den Oberkantenproduktgaskanälen (23c) aller Zellstapel verbunden ist und eingerichtet ist, darin ein Teilvakuum zu erzeugen.

11. System nach Anspruch 10, ferner umfassend:
- einen Speicherbehälter für wässrigen Elektrolyt,
- eine gesteuerte Zuführanordnung zwischen dem mindestens einen Speicherbehälter und dem Produktgasgenerator, welche ausgestaltet ist, um den Elektrolyt zu dem Generator zu führen.

12. System nach einem der vorhergehenden Ansprüche 10-11, ferner umfassend einen Gaswäscher zwischen dem Elektrolysegasgenerator und der Vakuumpumpe, wobei der Gaswäscher umfasst:
- einen Vorratsbehälter, welcher eine Flüssigkeit, z.B. Elektrolyt, enthält,
- einen Produktgaseinlass, welcher Produktgas in die Flüssigkeit einleitet,
- einen Produktgasauslass oberhalb der Flüssigkeit und verbunden mit der Vakuumpumpe.

13. Verbrennungssystem für Kohlenwasserstoffkraftstoff, umfassend:
- eine Kohlenwasserstoffkraftstoff-Verbrennungsvorrichtung, z.B. einen Verbrennungsmotor, z.B. einen Dieselmotor,
- einen Produktgasgenerator nach einem der vorhergehenden Ansprüche 1-9,
wobei das Produktgas der Kohlenwasserstoffkraftstoff-Verbrennungsvorrichtung zugeführt wird.

14. Frachtschiff, insbesondere Binnenwasserwegfrachtschiff, mit einem Schiffsantriebsmotor mit einer Kohlenwasserstoffkraftstoff-Verbrennungsvorrichtung und einem Elektrolyseproduktgasgenerator nach einem der vorhergehenden Ansprüche 1-9, wobei Produktgas der Kohlenwasserstoffkraftstoff-Verbrennungsvorrichtung zugeführt wird.

15. Verfahren zur Erzeugung von Produktgas, welches Wasserstoffgas und Sauerstoffgas enthält, auf der Basis einer Elektrolyse eines wässrigen Elektrolyten, wobei ein Elektrolyseproduktgasgenerator nach einem der Ansprüche 1-9 verwendet wird.

## Revendications

1. Générateur de gaz de produit d'électrolyse (1) destiné à produire un gaz de produit contenant de l'hydrogène et de l'oxygène sur la base de l'électrolyse d'un électrolyte aqueux, ledit générateur de gaz de produit comprenant un réservoir (2) ayant une admission d'électrolyte (3) et une évacuation de gaz de produit (4), et une alimentation (5a), dans lequel une rangée de plusieurs piles de cellules (11a ; 11b; 11c) est prévue dans ledit réservoir, chaque pile de cellules (11) étant composée d'éléments de plaques disposés à la verticale, comprenant, dans cet ordre :
- un élément de plaque d'isolation/de conduction (21) ;
- un premier élément de plaque de réaction (22) ;
- un élément de plaque d'espacement (23) ;
- un second élément de plaque de réaction (24) ;
dans lequel l'élément de plaque d'isolation/de conduction (21) possède une plaque d'isolation (21b) avec une fenêtre ou une encoche de bord (21a) dans laquelle une pièce conductrice (21e) est disposée à un emplacement de façon à être en contact avec le premier élément de plaque de réaction adjacent de la pile de cellules et avec le second élément de plaque de réaction adjacent d'une pile de cellules adjacente,
dans lequel le premier et le second éléments de plaques de réaction (22 ; 24) possèdent chacun un cadre d'isolation (22a) qui entoure une fenêtre (22b) et une plaque de réaction métallique (22c, 24c) disposée dans ladite fenêtre,
dans lequel l'élément de plaque d'espacement (23) possède un cadre isolant (23a) qui définit une poche (23b) dans ledit élément de plaque d'espacement,
dans lequel la poche est remplie avec l'électrolyte aqueux de sorte que l'électrolyte soit en contact avec la première et la seconde plaques de réaction métalliques adjacentes de la pile de cellules, la poche étant en communication avec l'admission d'électrolyte du réservoir,
dans lequel chaque élément de plaque (21, 22, 23, 24) possède un bord supérieur et un bord inférieur,
dans lequel chaque élément de plaque d'espacement (23) comprend en outre un canal d'électrolyte de bord inférieur (23d) qui s'étend le long dudit bord inférieur et distinct de ladite poche (23b), ledit canal d'électrolyte de bord inférieur étant en communication avec une admission d'électrolyte (3) du réservoir (2),
dans lequel le premier élément de plaque de réaction possède une découpe ou une encoche de bord (22g) dans une zone inférieure du cadre d'isolation de celui-ci intégré afin de définir un conduit d'admission d'électrolyte qui relie le canal d'électrolyte de bord inférieur (23d) et la poche dans l'élément de plaque d'espacement adjacent,
dans lequel l'élément de plaque d'isolation (21) possède, dans une zone d'angle inférieure de celui-ci, une découpe ou une encoche de bord (21d) distante de la fenêtre ou de l'encoche de bord dans laquelle une pièce conductrice est disposée, et dans lequel le premier et le second éléments de plaques de réaction de la même pile de cellules possèdent également chacun, dans leur zone inférieure, une découpe ou une encoche de bord (22f) dans leur cadre d'isolation, lesdites découpes ou encoches de bord dans la zone inférieure étant toutes alignées les unes avec les autres et étant en communication avec le canal d'électrolyte de bord inférieur (23d) afin de former un conduit d'électrolyte (40) vers ladite admission d'électrolyte (3) dudit réservoir (2).

2. Générateur de gaz de produit d'électrolyse (1) destiné à produire un gaz de produit contenant de l'hydrogène et de l'oxygène sur la base de l'électrolyse d'un électrolyte aqueux,
ledit générateur de gaz de produit comprenant un réservoir (2) ayant une admission d'électrolyte (3) et une évacuation de gaz de produit (4), et une alimentation (5a), dans lequel une rangée de plusieurs piles de cellules (11a ; 11b ; 11c) est prévue dans ledit réservoir, chaque pile de cellules (11) étant composée d'éléments de plaques disposés à la verticale, comprenant, dans cet ordre :
- un élément de plaque d'isolation/de conduction (21) ;
- un premier élément de plaque de réaction (22) ;
- un élément de plaque d'espacement (23) ;
- un second élément de plaque de réaction (24) ;
dans lequel l'élément de plaque d'isolation/de conduction (21) possède une plaque d'isolation (21b) avec une fenêtre ou une encoche de bord (21a) dans laquelle une pièce conductrice (21e) est disposée à un emplacement de façon à être en contact avec le premier élément de plaque de réaction adjacent de la pile de cellules et avec le second élément de plaque de réaction adjacent d'une pile de cellules adjacente,
dans lequel le premier et le second éléments de plaques de réaction (22 ; 24) possèdent chacun un cadre d'isolation (22a) qui entoure une fenêtre (22b) et une plaque de réaction métallique (22c, 24c) disposée dans ladite fenêtre,
dans lequel l'élément de plaque d'espacement (23) possède un cadre isolant (23a) qui définit une poche (23b) dans ledit élément de plaque d'espacement,
dans lequel la poche est remplie avec un électrolyte aqueux de sorte que l'électrolyte soit en contact avec la première et la seconde plaques de réaction métalliques adjacentes de la pile de cellules, la poche étant en communication avec l'admission d'électrolyte du réservoir,
dans lequel chaque élément de plaque (21, 22, 23, 24) possède un bord supérieur et un bord inférieur,
de préférence selon la revendication précédente,
dans lequel l'élément de plaque d'espacement (23) possède un canal de gaz de produit de bord supérieur (23c) qui s'étend le long du bord supérieur de celui-ci et distinct de ladite poche, ledit canal de gaz de produit de bord supérieur étant en communication avec l'évacuation de gaz de produit du réservoir,
dans lequel le premier élément de plaque de réaction possède une découpe ou une encoche de bord (22e) dans une zone supérieure du cadre d'isolation de celui-ci intégré afin de définir un conduit de sortie de gaz de produit qui relie la poche (23b) dans l'élément de plaque d'espacement adjacent (23) et le canal de gaz de produit de bord supérieur (23c) de celui-ci,
dans lequel l'élément de plaque d'isolation (21) possède, dans une zone supérieure de celui-ci, une découpe ou une encoche de bord (21c) distante de la fenêtre ou de l'encoche de bord (21a) dans laquelle une pièce conductrice est disposée, et dans lequel le premier et le second éléments de plaques de réaction de la même pile de cellules possèdent également chacun, dans leur zone supérieure, une découpe ou une encoche de bord (22d) dans le cadre d'isolation, lesdites découpes ou encoches de bord dans la zone supérieure étant toutes alignées les unes avec les autres et étant en communication avec le canal de gaz de produit de bord supérieur (23c) afin de former une évacuation de gaz de produit (30),
dans lequel - lorsqu'une source d'électricité est reliée à l'alimentation (5a) dudit générateur de gaz de produit (1), de sorte qu'un courant électrique circule entre les plaques de réaction métalliques dans les fenêtres du premier et du second éléments de plaques de réaction par le biais de l'électrolyte dans la poche - ledit électrolyte se décompose et le gaz de produit résultant quitte ladite poche de la pile de cellules via ledit conduit de sortie de gaz de produit, ledit canal de gaz de produit de bord supérieur (23c) et ladite évacuation de gaz de produit (30) vers ladite évacuation de gaz de produit (4) du réservoir.

3. Générateur de gaz de produit d'électrolyse selon l'une quelconque des revendications précédentes, dans lequel le générateur de gaz de produit comprend une première pile de cellules (11a) et une pile de cellules adjacente (11b),
dans lequel la pièce conductrice de l'élément de plaque d'isolation/de conduction de la première pile de cellules (11a) touche une zone latérale de la plaque de réaction du premier élément de plaque de réaction adjacent (22), et dans lequel la pièce conductrice de l'élément de plaque d'isolation/de conduction de la seconde pile de cellules touche une zone latérale opposée de la plaque de réaction du second élément de plaque de réaction adjacent (24) de la première pile de cellules (11a).

4. Générateur de gaz de produit d'électrolyse selon l'une quelconque des revendications précédentes, dans lequel les plaques de réaction métalliques (22c, 24c) du premier et du second éléments de plaques de réaction sont au moins aussi larges que la poche (23b) dans l'élément de plaque d'espacement (23).

5. Générateur de gaz de produit d'électrolyse selon l'une quelconque des revendications précédentes, dans lequel les plaques de réaction métalliques (22c, 24c) dans les fenêtres du premier et du second éléments de plaques de réaction (22, 24) possèdent une épaisseur égale ou légèrement inférieure à l'épaisseur du cadre d'isolation situé autour (22a, 24a).

6. Générateur de gaz de produit d'électrolyse selon l'une quelconque des revendications précédentes, dans lequel le cadre d'isolation (23a) de l'élément de plaque d'espacement (23) définit un bord inférieur et/ou supérieur (23b' ; 23b") de la poche afin de faciliter l'introduction de l'électrolyte via le conduit d'admission d'électrolyte et/ou la collecte du gaz de produit vers le conduit de sortie de gaz de produit.

7. Générateur de gaz de produit d'électrolyse selon l'une quelconque des revendications précédentes, dans lequel le canal d'électrolyte de bord inférieur (23d) et/ou le canal de gaz de produit de bord supérieur (23c) est intégré sous forme de partie renfoncée du bord inférieur et/ou supérieur de l'élément de plaque d'espacement (23).

8. Générateur de gaz de produit d'électrolyse selon l'une quelconque des revendications précédentes, dans lequel ledit élément de plaque d'espacement (23) est symétrique autour d'un axe de symétrie horizontal central de celui-ci.

9. Générateur de gaz de produit d'électrolyse selon l'une quelconque des revendications précédentes, dans lequel le premier et le second éléments de plaques de réaction (22 ; 24) sont de conception identique et possèdent un point de symétrie autour d'un point central de symétrie (P) de ceux-ci.

10. Système de génération d'un gaz de produit contenant de l'hydrogène et de l'oxygène sur la base de l'électrolyse d'un électrolyte aqueux, comme par exemple ledit gaz de produit à fournir à un dispositif de combustion d'hydrocarbures, comme par exemple un moteur à combustion interne, comme par exemple un moteur diesel, comme par exemple pour la propulsion d'un navire cargo de voies navigables intérieures, le système comprenant :
- un générateur de gaz de produit d'électrolyse (1) selon l'une quelconque des revendications 1 à 9,
- une pompe à vide reliée via l'évacuation de gaz de produit (4) et l'évacuation de gaz de produit (30) aux canaux de gaz de produit de bord supérieur (23c) de toutes les piles de cellules et adaptée pour créer un vide partiel à l'intérieur.

11. Système selon la revendication 10, comprenant en outre :
- une cuve de stockage d'électrolyte aqueux,
- un ensemble d'alimentation commandé entre ladite au moins une cuve de stockage et le générateur de gaz de produit adapté pour fournir ledit électrolyte au générateur.

12. Système selon l'une quelconque des revendications précédentes 10 et 11, comprenant en outre un épurateur de gaz entre le générateur de gaz d'électrolyte et la pompe à vide, dans lequel l'épurateur de gaz comprend :
- un réservoir qui contient un liquide, comme un électrolyte,
- une admission de gaz de produit qui introduit un gaz de produit dans ledit liquide,
- une évacuation de gaz de produit au-dessus du liquide et reliée à la pompe à vide.

13. Système de combustion d'hydrocarbures, comprenant :
- un dispositif de combustion d'hydrocarbures, comme un moteur à combustion interne, comme un moteur diesel,
- un générateur de gaz de produit selon l'une quelconque des revendications 1 à 9, dans lequel un gaz de produit est fourni au dispositif de combustion d'hydrocarbures.

14. Navire de charge, et en particulier navire de charge de voies navigables intérieures, ayant un moteur de propulsion avec un dispositif de combustion d'hydrocarbures et un générateur de gaz de produit d'électrolyse selon l'une quelconque des revendications précédentes 1 à 9, dans lequel un gaz de produit est fourni au dispositif de combustion d'hydrocarbures.

15. Procédé de génération d'un gaz de produit contenant de l'hydrogène et de l'oxygène sur la base de l'électrolyse d'un électrolyte aqueux, dans lequel un générateur de gaz de produit d'électrolyse selon l'une quelconque des revendications 1 à 9 est utilisé.
